# EUROPEAN PATENT APPLICATION

(11) **EP 2 584 346 A1**
(43) Date of publication of application: **24.04.2013**
(21) Application number: 11795715.9
(22) Date of filing: 13.06.2011
(51) Int. Cl.: G01N 21/88, C03B 35/16, G01N 21/892

(54) **DEFECT OCCURRENCE SOURCE IDENTIFICATION METHOD AND CONVEYING DEVICE MAINTENANCE METHOD**

(30) Priority: 17.06.2010 JP 2010138641
(71) Applicant: Asahi Glass Company, Limited, Tokyo 100-8405 (JP)
(72) Inventor: SHIOYA Toshikazu, Tokyo 100-8405 (JP); MURATA Mitsuru, Tokyo 100-8405 (JP); TAKATANI Kenichi, Tokyo 100-8405 (JP); TAKIGUCHI Tetsushi, Tokyo 100-8405 (JP); INOUE Shunji, Tokyo 100-8405 (JP)
(74) Representative: Müller-Boré & Partner Patentanwälte
(86) International application number: PCT/JP2011/063541
(87) International publication number: WO 2011/158810

(57) **Abstract**

The present invention relates to a method for identifying a defect occurrence source, said method including identifying a roll that generates defects at constant intervals in a conveying direction of a sheet-shaped glass when the sheet-shaped glass is conveyed by a plurality of rolls in an annealing device including a conveying device having the plurality of rolls, in which a peripheral velocity of a certain roll of the plurality of rolls is changed so as to be different from a conveyance speed of the sheet-shaped glass, thereby identifying a roll constituting the defect occurrence source, according to the result of a determination on whether or not there has been a change in intervals between the defects before and after changing the peripheral velocity.

## Description

### TECHNICAL FIELD

The present invention relates to a method for identifying a defect occurrence source and maintenance method for a conveying device.

### BACKGROUND OF THE INVENTION

In general, a glass sheet production system includes a shape forming device for forming a sheet-shaped glass from molten glass and an annealing device into which a formed sheet-shaped glass is conveyed. The annealing device includes a conveying device which has a plurality of rolls. After having been slowly cooled while being conveyed on the plurality of rolls in a predetermined direction within the annealing device, the sheet-shaped glass is discharged out of the annealing device. Following this, the sheet-shaped glass is cut to a predetermined dimension by a cutting machine to thereby be formed into a product glass sheet.

Incidentally, when a sheet of material such as a sheet-shaped glass is conveyed on a plurality of rolls, in the event that a contamination adheres to or a flaw exists on an outer circumferential surface of any of the rolls, a defect is formed on the surface of the sheet of material every time the roll rotates a full rotation. Such a defect appears cyclically at constant intervals in the conveying direction of the sheet of material. The interval substantially coincides with the length of the outer circumferential surface of the roll, and therefore, the interval is determined by an outer diameter of the roll.

Then, a method for identifying a roll which constitutes a defect occurrence source based on an outer diameter of a roll and intervals at which defects appear is proposed in a field other than the field of glass sheet production. This method is such that a roll which constitutes a defect occurrence source is identified quickly by employing a plurality of types of rolls which have different outer diameters. Additionally, according to this method, part of a plurality of rolls which have an outer circumferential length which coincides with intervals at which a defect appears is shifted in an axial direction to thereby change the position where a defect appears on a sheet of material, so that a roll which constitutes the defect occurrence source is identified based on the change.

The roll which is identified as the defect occurrence source is moved to a position which lies away from the sheet of material (normally, the roll is lowered so as to be moved away from the sheet of material) for replacement with a new roll. Thereafter, the replaced new roll is placed to the original roll position. In place of replacing the roll that is identified as causing defects with a new roll, the contamination (or the flaw) that adheres to the outer circumferential surface of the faulty roll may be removed. By maintaining the conveying device having the plurality of rolls in the serviced state in this way, the generation of defects can be eliminated. It is noted that hereinafter, in the description, a "contamination or flaw" on the outer circumferential surface of a roll may be referred to generally and simply as a "contamination" from time to time.

On the other hand, in the field of producing glass sheets by employing the floating method, dross or molten tin that adheres to a bottom surface of a glass ribbon that is removed from a floating bath adheres to a lift-out roll, and therefore, there is proposed a technique of removing such dross from the surface of the lift-out roll using such as carbon fiber (refer to Patent Document 1). This technique is such as to prevent a risk of the dross that adheres to the lift-out roll adhering again to the glass ribbon. When the dross that adheres to the glass ribbon adheres to a lehr roll that is disposed downstream, the dross hardens on the surface of the lehr roll to damage the glass ribbon. Then, the technique disclosed in Patent Document 1 is such as to remove the dross adhering to the lift-out roll with such as carbon fiber.

### BACKGROUND ART

### Patent Document

Patent Document 1: JP-A-2009-49366

### SUMMARY OF THE INVENTION

### PROBLEMS THAT THE INVENTION IS TO SOLVE

In the method for identifying a defect occurrence source that has been described above, however, since the roll is shifted in the axial direction, the work of shifting the position of the roll becomes complex and troublesome. Additionally, the range over which the roll is shifted is restricted by the size of the conveying device, and therefore, the change in position of the defect is small, this making the work of confirming the change in position of the defect complex and troublesome.

In addition, in the maintenance method for a conveying device that has been described above, since the roll that is identified as the defect occurrence source is shifted to the position which lies away from the sheet of material, there may be a situation where the sheet of material is deformed due to its own weight. Additionally, there may be a situation where a flow of air on the periphery of the sheet of material is changed in direction, leading to a situation where the temperature distribution on the sheet of material is changed, and this may warp the sheet of material. Thus, the maintenance method for a conveying device is found difficult to be used in the production of glass sheets. In addition, in the normal knowledge of the conventional people who are skilled in the art to which the invention pertains, it has been their general view that when the peripheral velocity of the rolls is changed in the midst of conveying a glass ribbon, there are fears that the glass ribbon is broken.
On the other hand, according to the technique that is disclosed in Patent Document 1, it is not possible to identify the roll in which a defect is generated, and there is a problem that the carbon fiber is easy to be deteriorated. Namely, since the oxygen concentration becomes high in the slow cooling device (the lehr) which is positioned downstream of the lift-out roll, the carbon fiber tends to react with oxygen more to be deteriorated easily as the sheet of material is conveyed further downstream.

The invention has been made in view of these situations, and a primary object thereof is to provide a method for identifying a defect occurrence source for identifying easily a roll which constitutes a defect occurrence source. In addition, a secondary object of the invention is to provide a maintenance method for a conveying device which can suppress the deformation of a sheet-shaped glass.

### MEANS FOR SOLVING THE PROBLEMS

In order to accomplish the above-mentioned object, the invention provides a method for identifying a defect occurrence source, said method comprising identifying a roll that generates defects at constant intervals in a conveying direction of a sheet-shaped glass when the sheet-shaped glass is conveyed by a plurality of rolls in an annealing device comprising a conveying device having the plurality of rolls, wherein a peripheral velocity of a certain roll of the plurality of rolls is changed so as to be different from a conveyance speed of the sheet-shaped glass, thereby identifying a roll constituting the defect occurrence source, according to the result of a determination on whether or not there has been a change in intervals between the defects before and after changing the peripheral velocity.

In order to accomplish the above-mentioned object, the invention provides a maintenance method for a conveying device for conveying a sheet-shaped glass by a plurality of rolls, wherein, in a contact position between a roll to which a contamination adheres and the sheet-shaped glass, a velocity vector of the roll to which the contamination adheres and a velocity vector of the sheet-shaped glass are made to differ from each other so as to apply a shearing stress to the contamination, thereby removing or reducing the contamination.

In the method for identifying a defect occurrence source of the invention, it is preferable that the peripheral velocity of the certain roll is changed by changing an angular velocity of the certain roll.

In the method for identifying a defect occurrence source of the invention, it is preferable that the peripheral velocity of the certain roll is changed by changing an outer diameter of the certain roll.

In the method for identifying a defect occurrence source of the invention, it is preferable that the outer diameter of the certain roll is increased by heating the certain roll.

In the method for the maintenance method for a conveying device, it is preferable that a peripheral velocity of the roll to which the contamination adheres is changed so that the peripheral velocity differs from a conveyance speed of the sheet-shaped glass.

In the method for the maintenance method for a conveying device, it is preferable that the peripheral velocity of the roll to which the contamination adheres is changed by changing an angular velocity of the roll to which the contamination adheres.

In the method for the maintenance method for a conveying device, it is preferable that the peripheral velocity of the roll to which the contamination adheres is changed by changing an outer diameter of the roll to which the contamination adheres.

In the method for the maintenance method for a conveying device, it is preferable that the roll to which the contamination adheres is heated so as to increase the outer diameter thereof.

In the method for the maintenance method for a conveying device, it is preferable that a rotational direction of the roll to which the contamination adheres is set in a direction opposite to a conveying direction of the sheet-shaped glass.

In the method for the maintenance method for a conveying device, it is preferable that a position of the roll to which the contamination adheres is shifted relative to the sheet-shaped glass in a different direction from the conveying direction of the sheet-shaped glass, while contacting the roll to which the contamination adheres and the sheet-shaped glass.

In the method for the maintenance method for a conveying device, it is preferable that the roll to which the contamination adheres is shifted in an axial direction thereof.

In the method for the maintenance method for a conveying device, it is preferable that (a) among the rolls to which the contamination adheres, pressing a member made of carbon against a roll inside a dross box being disposed upstream of an annealing device, thereby removing or reducing the contamination, and (b) among the rolls to which the contamination adheres, a velocity vector of a roll inside the annealing device and a velocity vector of the sheet-shaped glass are made to differ from each other so as to apply a shearing stress to the contamination, thereby removing or reducing the contamination.

In the method for the maintenance method for a conveying device, it is preferable that (a) among the rolls to which the contamination adheres, pressing a member made of carbon against a roll inside a dross box being disposed upstream of an annealing device, thereby removing or reducing the contamination, and (b) among the rolls to which the contamination adheres, a velocity vector of a roll inside the annealing device and a velocity vector of the sheet-shaped glass are made to differ from each other so as to apply a shearing stress to the contamination, thereby removing or reducing the contamination.

### ADVANTAGE OF THE INVENTION

According to the invention, it is possible to provide the method for identifying a defect occurrence source which can easily identify a roll which constitutes a defect occurrence source. Additionally, according to the invention, it is possible to provide the maintenance method for a conveying device which can suppress the deformation of the sheet-shaped glass. In particular, according to the invention, since the aforesaid operations can be implemented without opening the annealing device, there is provided an advantage that no temperature change is generated within the annealing device. Consequently, the production of products can be implemented immediately after the contamination on the surface of the roll has been removed therefrom.

### BRIEF DESCRIPTION OF THE DRAWINGS

[Fig. 1] Fig. 1 is a side sectional exemplary diagram of a conveying device to which a method for identifying a defect occurrence source according to a first embodiment of the invention is applied.
[Fig. 2] Fig. 2 is a process diagram of the method for identifying a defect occurrence source according to the first embodiment of the invention.
[Fig. 3] Fig. 3 is a side sectional exemplary diagram of a conveying device to which a maintenance method for a conveying device according to a second embodiment of the invention is applied.

### MODE FOR CARRYING OUT THE INVENTION

Hereinafter, a mode for carrying out the invention will be described by reference to the drawings. It should be noted that the invention is not limited to embodiments that will be described later and hence, various modifications and replacements can be made to the embodiments that will be described below without departing from the scope of the invention.

### (First Embodiment)

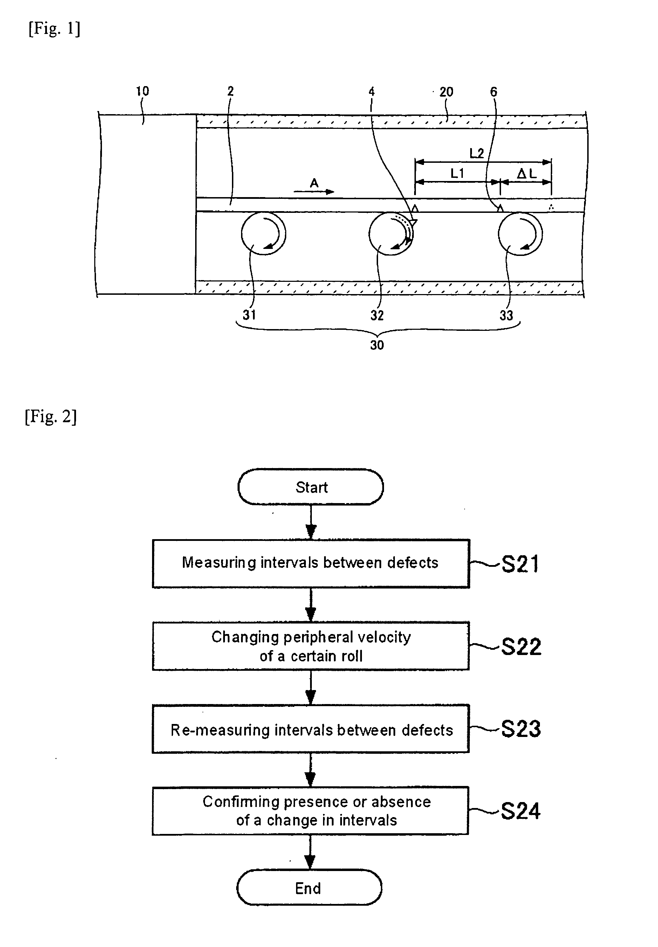

Fig. 1 is a side sectional exemplary diagram of a conveying device to which a method for identifying a defect occurrence source according to a first embodiment of the invention is applied. In Fig. 1, the position of a defect before a peripheral velocity change is indicated by a solid line, while the position of the defect after the peripheral velocity change is indicated by a broken line.

The first embodiment relates to a method for identifying a defect occurrence source. As shown in Fig. 1, a glass sheet production system includes a shape forming device 10 for forming a sheet-shaped glass 2 from molten glass and an annealing device 20 into which the sheet-shaped glass 2 formed in the shape forming device 10 is conveyed.

The shape forming device 10 may be a general shape forming device such as a float shape forming device or a fusion shape forming device, for example. The float shape forming device is a device for forming a sheet-shaped glass 2 by continuously supplying molten glass on to the surface of a bath of molten metal (represented by molten tin). The fusion shape forming device is a device for forming a sheet-shaped glass 2 by causing streams of molten glass to flow down along both side surfaces of a trough-shaped forming body and allowing the streams of molten glass to merge with each other near a lower edge of the forming body.

The annealing device 20 includes a conveying device 30 which has a plurality of rolls 31 to 33. It should be noted that although Fig. 1 shows only the three rolls 31 to 33, the number of rolls which are provided in the annealing device 20 is not limited to three. The plurality of rolls 31 to 33 are driven to rotate by a driving device such as an electric motor so as to convey a sheet-shaped glass 2 in a predetermined direction (a direction indicated by an arrow A).

The rotational direction of the individual rolls 31 to 33 is set so that the rolls 31 to 33 rotate in a forward direction with respect to the conveying direction of the sheet-shaped glass 2. Additionally, the peripheral velocity of the individual rolls 31 to 33 is set so as to be substantially the same as the conveyance speed of the sheet-shaped glass 2. Respective outer circumferential surfaces of the rolls 31 to 33 are in contact with a lower surface of the sheet-shaped glass 2 as shown in Fig. 1, for example, and the sheet-shaped glass 2 is conveyed horizontally.

The plurality of rolls 31 to 33 may have the same outer diameter or may have different outer diameters. In the case of the former, since the number of types of rolls is not many, the management cost of the rolls can be reduced. In the case of the latter, the number of types of rolls is many, the number of candidates for a defect occurrence source can be reduced in a measuring step (step S21) which will be described later, thereby making it possible to identify the defect occurrence source quickly.

The driving method of the plurality of rolls 31 to 33 is not specifically limited. For example, the plurality of rolls 31 to 33 is individually connected to one driving device (for example, an electric motor) via any of a plurality of gears, so that the plurality of rolls 31 to 33 may be driven to rotate by the one driving device. In this case, the number of driving devices and the number of control devices (for example, microcomputers) for controlling the driving devices can be reduced, thereby making it possible to simplify the conveying device.

Additionally, the plurality of rolls 31 to 33 may individually be connected to any of a plurality of driving devices so that the plurality of rolls 31 to 33 are driven to rotate by the plurality of driving devices. In this case, by controlling independently the plurality of driving devices, angular velocities of the plurality of rolls 31 to 33 can be controlled independently. Consequently, the angular velocity of any specific roll can easily be changed.

The sheet-shaped glass 2 is slowly cooled while being conveyed on the plurality of rolls 31 to 33 in a predetermined direction within the annealing device 20 and is thereafter conveyed out of the annealing device 20. Following this, the sheet-shaped glass 2 is cut to a predetermined dimension by a cutting machine to become a product glass sheet.

Incidentally, in the event that a contamination 4 (or a flaw) adheres to an outer circumferential surface of any of the rolls (for example, the roll 32) when the sheet-shaped glass 2 is conveyed by the plurality of rolls 31 to 33, a defect 6 is formed on the surface of the sheet-shaped glass 2 every time the roll 32 rotates one full rotation. This defect 6 appears cyclically at constant intervals L1 in the conveying direction of the sheet-shaped glass 2. The interval L1 substantially coincides with an outer circumferential length of the roll 32 and is hence determined by an outer diameter of the roll 32.

In this embodiment, a method for identifying the roll 32 which constitutes the defect occurrence source includes, as shown in Fig. 2, a measuring step (step S21) of measuring intervals L1 at which the defect 6 appears cyclically or between defects 6, a changing step (step S22) of changing the peripheral velocity of part of the rolls, a re-measuring step (step S23) of re-measuring intervals L2 at which the defect 6 appears cyclically between defects 6, and a confirmation step (step S24) of confirming a change in intervals between defects 6, these steps being arranged sequentially in that order.

In the measuring step (step S21), intervals L1 between defects 6 are measured. Following this, it is confirmed that the intervals L1 so measured coincide with an outer circumferential length of any of the plurality of rolls 31 to 33, and the roll of which the outer circumferential length coincides with the intervals L1 so measured is determined to be a candidate for the defect occurrence source.

In the changing step (step S22), the peripheral velocity of the roll (for example, the roll 32) of the plurality of rolls 31 to 33 which is determined as the candidate for the defect occurrence source is changed so as to be different from the conveyance speed of the sheet-shaped glass 2. The roll 32 of which the peripheral velocity is changed comes to slip relative to the sheet-shaped glass 2. Consequently, when a contamination 4 (or a flaw) adheres to an outer circumferential surface of the roll 32 of which the peripheral velocity is changed, the intervals L1 between defects 6 are changed to intervals L2. The inventor et al of this invention have verified that there is caused no such situation that the sheet-shaped glass 2 is easily broken even in the event that the sheet-shaped glass 2 is caused to slip on the roll 32.

For example, when the peripheral velocity of the roll 32 is slowed, the rotation cycle of the roll 32 is lengthened, and therefore, as is indicated by the broken line in Fig. 1, the intervals between defects 6 are lengthened. As the peripheral velocity of the roll 32 approaches 0, the intervals between defects 6 approach infinity.

On the other hand, when the peripheral velocity of the roll 32 is quickened, the rotational cycle of the roll 32 is shortened, and therefore, the intervals between defects 6 are shortened. When the peripheral velocity of the roll 32 approximates to infinity, the intervals between defects 6 come to approach 0.

It is noted that the peripheral velocity of the roll 32 may be changed after the rotational direction of the roll 32 has been set to an opposite direction. In this case, too, since the rotational cycle of the roll 32 is changed, the intervals of the defect 6 change.

It is desirable that the peripheral velocity of the roll 32 is changed so as to easily confirm whether or not the intervals of the defect 6 have changed. The amount by which the peripheral velocity is changed is set based on the outer diameter of the roll 32.

As a method of changing the angular velocity of the roll, there are, for example, a method of changing the angular velocity of the roll and a method of changing the outer diameter of the roll.

When the angular velocity of the roll is changed, a method is used which corresponds to the driving method of the rolls. For example, when the plurality of rolls 31 to 33 are individually connected to the one driving device via any of the plurality of gears, there is a method of driving a specific roll to rotate by a separate driving device by removing the gear which is connected to the specific roll. Additionally, when the plurality of rolls 31 to 33 are individually connected to any of the plurality of driving devices, there is a method of changing the angular velocity of a specific roll by controlling independently the output of the driving device which is connected to the specific roll. These methods can also be used as a method of changing the rotational direction of the roll.

When the outer diameter of the roll is changed, the roll may be heated so as to increase the outer diameter thereof or the roll may be cooled so as to decrease the outer diameter thereof. The method of heating the roll to increase the outer diameter thereof is suitable when a sheet-shaped glass 2 which is formed in the shape forming device 10 is conveyed. As this occurs, since the temperature of the sheet-shaped glass 2 is high, it is possible to suppress the cracking of the sheet-shaped glass 2 that would otherwise be the case due to thermal shock.

A roll of which the peripheral velocity is to be changed is preferentially selected from rolls having a high possibility to constitute a defect occurrence source. Rolls which are located at an upstream side of the conveying direction are raised as such a roll.

When there are three or more rolls which can be candidates for a defect occurrence source, the number of rolls of which the peripheral velocity is to be changed may be more than one. By so doing, it is possible to shorten the time required to identify a defect occurrence source. However, when there are too many rolls of which the peripheral velocity is to be changed, the conveyance speed of the sheet-shaped glass 2 is changed, which is not preferable.

When peripheral velocities of a plurality of rolls are changed, the peripheral velocities of the plurality of rolls may be changed to peripheral velocities which are different from each other. As this occurs, by looking into a variation in intervals ΔL (ΔL=|L2-L1|), which will be described later, the time required to identify the defect occurrence source can be shortened further.

In the re-measuring step (step S23), intervals L2 between defects 6 are remeasured after the changing step (step S22). The peripheral velocity that has been changed (and the rotational direction that has been changed) may be returned to the original peripheral velocity (and rotational direction) after the re-measuring so that the peripheral velocity of the roll coincides with the conveyance speed of the sheet-shaped glass 2.

In the confirmation step (step S24), the result of the measuring in the measuring step (step S21) and the result of the re-measuring in the re-measuring step (step S23) are compared with each other, so as to confirm whether or not there has been a change in intervals between defects 6 before and after the peripheral velocity of the roll is changed.

Next, a case will be described where there is a change in intervals between defects 6. In this case, it is checked whether or not the number of rolls of which the peripheral velocity is changed in the previous changing step (step S22) is one or more.

When the number of rolls of which the peripheral velocity is changed is one, the roll of which the peripheral velocity has been changed is identified as a defect occurrence source, and the present operation ends. When identifying the defect occurrence source, it may be confirmed that the variation in intervals ΔL satisfies a relationship of ΔL=L1×|V1-V2|/V1, where V1, V2 denote peripheral velocities of the roll, V1 denoting the peripheral velocity before the change (that is, the conveyance speed of the sheet-shaped glass 2), V2 denoting the peripheral velocity after the change. The accuracy at which the defect occurrence source is identified can be enhanced by this confirmation.

On the contrary, when the number of rolls of which the peripheral velocity has been changed is not one (that is, there are a plurality of rolls of which the peripheral velocity has been changed), the rolls of which the peripheral velocity has been changed are determined to be candidates for a defect occurrence source. Following this, the steps after the changing step (step S22) are performed repeatedly.

Next, a case will be described where there has been no change in intervals between defects 6. In this case, it is checked whether or not the number of rolls of which the peripheral velocity has not been changed in the previous changing step (step S22) is one or more.

When the number of rolls of which the peripheral velocity is not changed is one, the roll of which the peripheral velocity is not changed is identified as a defect occurrence source, and the present operation ends.

On the contrary, when the number of rolls of which the peripheral velocity is not changed is not one (that is, there are a plurality of rolls of which the peripheral velocity is not changed), the rolls of which the peripheral velocity is not changed are determined to be candidates for a defect occurrence source. Following this, the steps after the changing step (step S22) are performed repeatedly on those rolls.

In this embodiment, the peripheral velocity of the roll or rolls of the plurality of rolls 31 to 33 is changed to differ from the conveyance speed of the sheet-shaped glass 2 in this way to thereby identify the roll which constitutes the defect occurrence source, and therefore, the operation of shifting the position of the roll can be omitted.

Additionally, in this embodiment, the intervals between defects 6 can be changed without shifting the position of the roll, and therefore, the size of the conveying device 30 cannot be a restriction. Consequently, the variation in intervals ΔL can be set large, and therefore, it is possible to confirm easily whether or not there has been a change in intervals.

In the embodiment that has been described heretofore, while the conveying device 30 is provided within the annealing device 20, the conveying device 30 may be provided outside the annealing device 20. For example, the conveying device 30 may be provided further downstream than the cutting machine.

Additionally, in the embodiment that has been described above, while the outer circumferential surfaces of the plurality of rolls 31 to 33 are described as being in contact with the lower surface of the sheet-shaped glass 2, the contact position is not limited thereto. For example, the outer circumferential surface of any of the plurality of rolls 31 to 33 may be in contact with an upper surface of the sheet-shaped glass 2.

In addition, in the embodiment that has been described above, while the sheet-shaped glass 2 is conveyed horizontally, in the case of a sheet of material which can elastically be deformed, the sheet of material may be conveyed in a zigzag fashion (or so as to be snaked).

Additionally, in the embodiment that has been described above, while the intervals L1, L2 between defects 6 are described as being measured before and after the peripheral velocity of the roll is changed, respectively, the invention is not limited thereto. For example, in the case of the plurality of rolls having the same outer diameter, the initial intervals L1 between defects 6 are known in advance, and hence, the intervals L1 may not be measured.

### (Second Embodiment)

A second embodiment relates to a maintenance method of the conveying device 30 shown in Fig. 1. This maintenance method is applied to a case where a contamination 4 adheres to an outer circumferential surface of any of a plurality of rolls 31 to 33. As a method of identifying a roll to which a contamination 4 adheres (hereinafter, referred to as a "defective roll"), a conventional identification method may be used in addition to the method for identifying a defect occurrence source according to the first embodiment. It is noted that the following operations may be performed without identifying a defective roll on conditions that all of the rolls 31 to 33 are defective rolls.

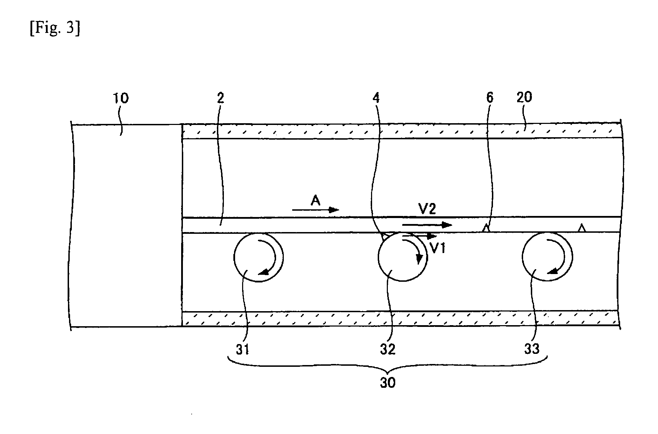

As shown in Fig. 3, the maintenance method of the conveying device 30 is a method in which a velocity vector V1 of a defective roll 32 and a velocity vector V2 of a sheet-shaped glass 2 are made different from each other in a contact position between the defective roll 32 and the sheet-shaped glass 2 so as to apply a shearing stress to the contamination 4 to thereby remove or reduce the contamination 4. Since the contamination 4 is eliminated or rounded by removing or reducing the contamination 4, the generation of a defect 6 can be eliminated.

As a difference between the velocity vectors V1, V2 increases, the shearing stress that is applied to the contamination 4 increases. It is noted that the difference between the velocity vectors V1, V2 may be optimized based on the shape and material of the sheet-shaped glass 2 so that the sheet-shaped glass 2 is not deformed by the shearing stress.

As a method of differentiating the velocity vectors V1, V2, there are (1) a method in which the peripheral velocity of the defective roll 32 is changed so as to be different from the conveyance speed of the sheet-shaped glass 2, (2) a method in which the rotational direction of the defective roll 32 is set to be opposite to the conveying direction of the sheet-shaped glass 2, and (3) a method in which the position of the defective roll 32 is shafted in a different direction from the conveying direction of the sheet-shaped glass 2. This embodiment relates to the methods (1) and (2) described above. The method (3) described above will be described as a third embodiment.

When the peripheral velocity of the defective roll 32 is changed while the rotational direction of the defective roll 32 is kept set to a forward direction relative to the conveying direction of the sheet-shaped glass 2, the defective roll 32 slips on the sheet-shaped glass 2, whereby a shearing stress is applied to the contamination 4 as a result of friction, so that the contamination 4 is removed or reduced. It is found experimentally that a peripheral velocity resulting after the change preferably has a difference of 2.0% or more relative to the peripheral velocity before the change (that is, the conveyance speed of the sheet-shaped glass 2). Additionally, setting the rotational direction of the defective roll 32 to an opposite direction to the conveying direction of the sheet-shaped glass 2 can enhance the shearing stress that is applied to the contamination 4.

As a method of changing the peripheral velocity of the defective roll 32, there are, for example, methods of changing the angular velocity of the defective roll 32, which is similar to the method described in the first embodiment, and a method of changing the outer diameter of the defective roll 32.

When the angular velocity of the defective roll 32 is changed, methods are used which correspond to driving methods of the defective roll 32. For example, when the plurality of rolls 31 to 33 are individually connected to one driving device via any of a plurality of gears, there is used a method of driving the defective roll 32 to rotate by a separate driving device by disengaging the gear that is connected to the defective roll 32. Additionally, when the plurality of rolls 31 to 33 are individually connected to any of a plurality of driving devices, there is used a method of changing the angular velocity by controlling independently the output of the driving device that is connected to the defective roll 32. These methods can be used as a method of changing the rotational direction of the defective roll 32.

When the outer diameter of the defective roll 32 is changed, the defective roll 32 may be heated so as to increase the outer diameter thereof or the defective roll 32 may be cooled so as to decrease the outer diameter thereof. The method of heating the defective roll 32 to increase the outer diameter thereof is suitable for a case where a sheet-shaped glass 2 that is formed in the shape forming device 10 is conveyed. As this occurs, since the temperature of the sheet-shaped glass 2 is high, it is possible to suppress the cracking of the sheet-shaped glass 2 that would otherwise be the case due to thermal shock.

Thus, according to the embodiment, the peripheral velocity or/and the rotational direction of the defective roll 32 are changed so as to be different from the conveyance speed of the sheet-shaped glass 2, whereby a shearing stress is applied to the contamination 4 so as to remove or reduce the contamination 4. Thus, the operation of shifting the position of the defective roll 32 can be omitted.

Additionally, in this embodiment, since the position of the defective roll 32 is not shifted, the deformation of the sheet-shaped glass 2 can be prevented that would otherwise be the case due to its own weight. In addition, the flow of air on the periphery of the sheet-shaped glass 2 is stabilized so as to stabilize, in turn, the temperature distribution of the sheet-shaped glass 2, thereby making it possible to reduce the risk of the sheet-shaped glass 2 warping.

It is noted that many flaws are produced in a lower surface of the sheet-shaped glass 2 as a result of performing the contamination removing operation. Because of this, it is difficult to use the sheet-shaped glass 2 on which the contamination removing operation is performed as a product. Consequently, it is preferable that the contamination removing operation is to be executed when the equipment is periodically inspected and should not be executed during the production of products.

### (Third Embodiment)

A third embodiment relates to a maintenance method of the conveying device 30, and in this embodiment, as a method of differentiating the velocity vectors V1, V2, the method described under (3) above is used. Namely, in this embodiment, while a defective roll 32 is kept in contact with a sheet-shaped glass 2, the position of the defective roll 32 is shifted relative to the sheet-shaped glass 2 in a direction which is different from the conveying direction of the sheet-shaped glass 2. For example, the defective roll 32 is shifted in an axial direction thereof.

Then, since the defective roll 32 comes to slip relative to the sheet-shaped glass 2, a shearing stress is applied to a contamination 4 as a result of friction, whereby the contamination 4 is removed or reduced. Consequently, the generation of a defect 6 can be eliminated. The position of the defective roll 32 may be reciprocated in the axial direction of the defective roll 32 until the generation of a defect 6 is eliminated.

Thus, according to this embodiment, since the foreign mater 4 is removed or reduced while the defective roll 32 and the sheet-shaped glass 2 are kept in contact with each other, the deformation of the sheet-shaped glass 2 can be prevented that would otherwise be the case due to its own weight. Additionally, the flow of air on the periphery of the sheet-shaped glass 2 is stabilized so as to stabilize, in turn, the temperature distribution of the sheet-shaped glass 2, thereby making it possible to reduce the risk of the sheet-shaped glass 2 warping.

### (Fourth Embodiment)

A glass sheet production device employing the floating method includes a shape forming device 10 which includes a floating bath and an annealing device 20. A dross box is disposed upstream of the annealing device 20. A plurality of lift-out rolls is disposed within the dross box and the dross box is configured so that the atmosphere in the annealing device 20 is prevented from infiltrating thereinto. Dross or molten tin in the floating bath tends to easily adhere to the left-out rolls as contaminations (contaminations containing tin as a main constituent). Then, it is preferable that these contaminations be removed or reduced by employing a method of pressing a carbon made member (carbon fiber or carbon made block) against the rolls.

On the other hand, although glass cullet easily adheres to rolls inside the annealing device 20, the adhesion of the glass cullet to the rolls is weaker than that of tin, and therefore, it is preferable to remove or reduce the glass cullet by employing the method of changing the velocity vectors of the rolls which is described above. The temperature inside the annealing device 20 is lower than that in the dross box, and there may be a situation where a glass ribbon that hardens is cracked, and the glass cullet is easy to cause a contamination (a contamination containing glass as a main constituent). Additionally, the oxygen concentration inside the annealing device 20 is higher than that inside the dross box, and therefore, a fusible carbon made member is difficult to be used therein. Thus, it is preferable to use the different contamination removing methods inside the dross box and the annealing device as has been described above.

While the invention has been described in detail with reference to specific embodiments thereof, it will be apparent to one skilled in the art that various changes and modifications can be made therein without departing from the spirit and scope thereof.
Incidentally, the present application is based on Japanese Patent Application No. 2010-138641 filed on June 17, 2010, and the contents are incorporated herein by reference.

### DESCRIPTION OF REFERENCE NUMERALS AND SIGNS

- 2: Sheet-shaped glass
- 4: Contamination
- 6: Defect
- 10: Shape forming device
- 20: Annealing device
- 30: Conveying device
- 31 to 33: Roll

## Claims

1. A method for identifying a defect occurrence source, said method comprising identifying a roll that generates defects at constant intervals in a conveying direction of a sheet-shaped glass when the sheet-shaped glass is conveyed by a plurality of rolls in an annealing device comprising a conveying device having the plurality of rolls,
wherein a peripheral velocity of a certain roll of the plurality of rolls is changed so as to be different from a conveyance speed of the sheet-shaped glass, thereby identifying a roll constituting the defect occurrence source, according to the result of a determination on whether or not there has been a change in intervals between the defects before and after changing the peripheral velocity.

2. The method for identifying a defect occurrence source according to claim 1,
wherein the peripheral velocity of the certain roll is changed by changing an angular velocity of the certain roll.

3. The method for identifying a defect occurrence source according to claim 1,
wherein the peripheral velocity of the certain roll is changed by changing an outer diameter of the certain roll.

4. The method for identifying a defect occurrence source according to claim 3,
wherein the outer diameter of the certain roll is increased by heating the certain roll.

5. A maintenance method for a conveying device for conveying a sheet-shaped glass by a plurality of rolls,
wherein, in a contact position between a roll to which a contamination adheres and the sheet-shaped glass, a velocity vector of the roll to which the contamination adheres and a velocity vector of the sheet-shaped glass are made to differ from each other so as to apply a shearing stress to the contamination, thereby removing or reducing the contamination.

6. The maintenance method for a conveying device according to claim 5,
wherein a peripheral velocity of the roll to which the contamination adheres is changed so that the peripheral velocity differs from a conveyance speed of the sheet-shaped glass.

7. The maintenance method for a conveying device according to claim 6,
wherein the peripheral velocity of the roll to which the contamination adheres is changed by changing an angular velocity of the roll to which the contamination adheres.

8. The maintenance method for a conveying device according to claim 6,
wherein the peripheral velocity of the roll to which the contamination adheres is changed by changing an outer diameter of the roll to which the contamination adheres.

9. The maintenance method for a conveying device according to claim 8,
wherein the roll to which the contamination adheres is heated so as to increase the outer diameter thereof.

10. The maintenance method for a conveying device according to claim 5,
wherein a rotational direction of the roll to which the contamination adheres is set in a direction opposite to a conveying direction of the sheet-shaped glass.

11. The maintenance method for a conveying device according to claim 5,
wherein a position of the roll to which the contamination adheres is shifted relative to the sheet-shaped glass in a different direction from the conveying direction of the sheet-shaped glass, while contacting the roll to which the contamination adheres and the sheet-shaped glass.

12. The maintenance method for a conveying device according to claim 11,
wherein the roll to which the contamination adheres is shifted in an axial direction thereof.

13. The maintenance method for a conveying device according to any one of claims 5 to 12,
wherein
(a) among the rolls to which the contamination adheres, pressing a member made of carbon against a roll inside a dross box being disposed upstream of an annealing device, thereby removing or reducing the contamination, and
(b) among the rolls to which the contamination adheres, a velocity vector of a roll inside the annealing device and a velocity vector of the sheet-shaped glass are made to differ from each other so as to apply a shearing stress to the contamination, thereby removing or reducing the contamination.

14. The maintenance method for a conveying device according to claim 13,
wherein
(a) in the dross box, a contamination that contains tin as a main constituent is removed from the roll, and
(b) in the annealing device, a contamination that contains glass as a main constituent is removed from the roll.
